Europäisches Patentamt

European Patent Office

Office européen des brevets

(11) Publication number: **0 319 632 B1**

# EUROPEAN PATENT SPECIFICATION

(45) Date of publication of patent specification: **21.10.92**   (51) Int. Cl.⁵: **H02K  37/12**

(21) Application number: **87810735.8**

(22) Date of filing: **10.12.87**

(54) Electric motor with a multipolar permanent magnet rotor.

(43) Date of publication of application:
**14.06.89 Bulletin  89/24**

(45) Publication of the grant of the patent:
**21.10.92 Bulletin  92/43**

(84) Designated Contracting States:
**CH DE FR GB IT LI NL SE**

(56) References cited:
**EP-A- 0 242 673**
**WO-A-83/02042**

(73) Proprietor: **PORTESCAP**
**Rue Jardinière 157**
**CH-2300 La Chaux-de-Fonds(CH)**

(72) Inventor: **Oudet, Claude**
**12, rue du Capitaine Arrachart**
**F-25000 Besancon(FR)**

(74) Representative: **Hranitzky, Wilhelm Max et al**
**c/o WILLIAM BLANC & CIE 9, rue du Valais**
**CH-1202 Genève(CH)**

Rank Xerox (UK) Business Services

## Description

The present invention relates to an electric motor of the type described in the introductory clauses of claims 1 and 2.

In known motors of this type, as disclosed in US patent 4518883, the air-gap has been dimensioned on the basis of the following consideration. The Ampere-turns $ni$ of the energizing coil are related to the magnetic field H created in the air gap and to the air-gap width E by the relationship $ni = H.E$. The value of $ni$ is limited in particular by the necessary heat dissipation in the stator structure.

Accordingly, in order to increase the torque C delivered by the motor for a given value of $ni$ it is necessary to increase the factor $\gamma$ appearing in the relationship $C = \gamma.ni$ which represents the torque per Ampere-turn.

The obvious way to increase the torque per Ampere-turn was to increase the magnetic energy contained in the system and consequently the volume of the permanent magnet. The dimensions of the permanent magnet in the above- mentioned parallel surfaces are limited and determined by the size of the motor and the number of poles required in the multipolar magnet arrangement. The remaining dimension is the one in the direction of the width of the air-gap, thus it seems appropriate to choose a relatively large value for the air-gap width E which allows the use of a corresponding, relatively thick permanent magnet. This tendency was also supported by the fact that thicker magnets of rare earth materials are less fragile and by the generally good performances, particularly dynamic performances, of the motors of this type as compared to those of other motors of the same power or volume.

It has now been found that the usual approach does not lead to actually optimum performance of the motor, but unexpected small air-gaps and accordingly thin permanent magnets provide a maximum torque per Ampere-turn, as well as very good dynamic characteristics, such as power rate and acceleration.

It is the main object of the present invention to provide an electric motor which delivers a high torque per Ampere-turn and presents a high power rate and acceleration of the movable member.

In accordance with the invention, an electric motor of the type referred to in claims 1 and 2 is characterized by the features recited in the respective characterizing clauses of claims 1 and 2.

Preferred embodiments of the invention are described in the claims 3 to 6.

Throughout the present specification and claims, the word "air-gap" does not define the actual air space of the magnetic circuits referred to, but instead refers to the space between opposite parts of permeable magnetic material and, accordingly, the entire space in which a permanent magnet is placed in the various embodiments. For example, in the embodiment where the movable member contains a yoke part, the air-gap extends between that yoke part and the opposite polar part of the stator. If, on the other hand, the permanent magnet is placed between two opposite polar parts of the stator, the air-gap extends between those opposite polar parts.

The invention, its objects and advantages will be better understood in light of the following description, illustrated by the accompanying drawings, in which:

Fig. 1 is a partial top view of the lower part of the stator of one embodiment of the motor of the invention,

Fig. 2 is an axial sectional view of the motor partially represented in fig. 1, along the broken line A-B-C-D-E-F,

Fig. 3 is an axial sectional view of a two-phase synchronous motor having two stages,

Fig. 4 is a sectional view along the line IV-IV of fig. 3,

Fig. 5 is a schematic view showing the definition of the minimum air gap width in a motor wherein the rotor comprises a yoke part, and

Fig. 6 is a graph showing the range of P/E, i.e. the pole pitch/air-gap width according to the invention as a function of P and the variation of $\gamma$ as a function of E in the respective ranges for two different motor types.

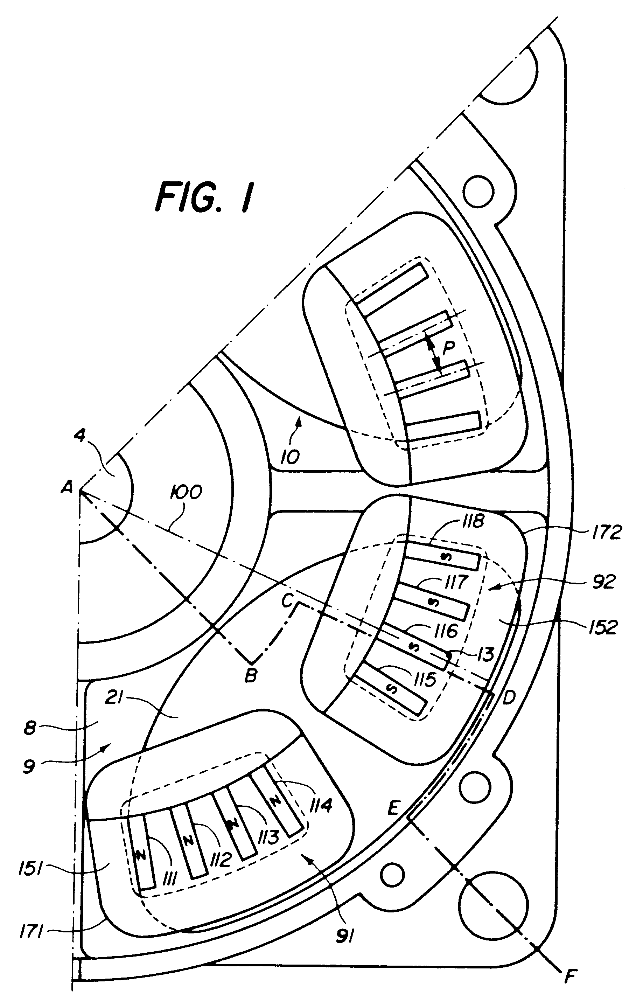

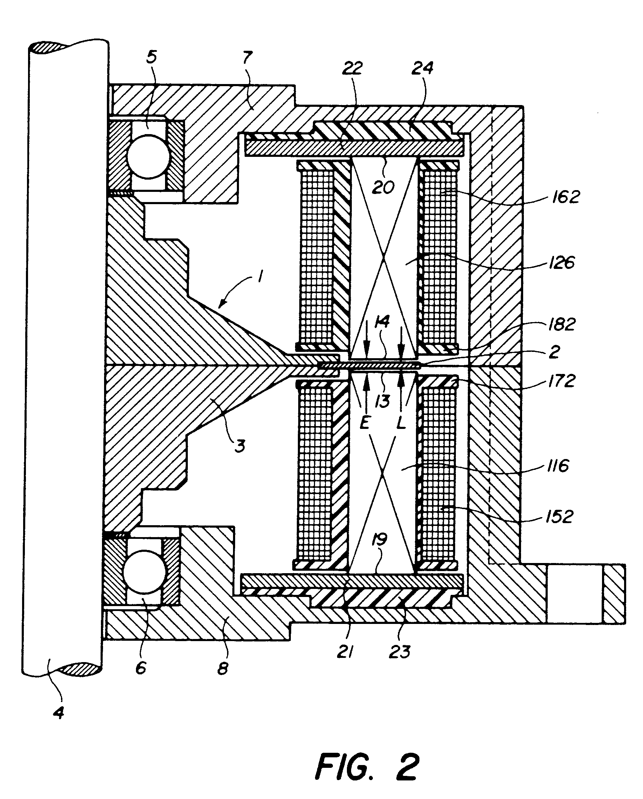

Figures 1 and 2 show a typical motor of the type referred to at the beginning and which is also described in US patent 4'518'883 to Claude Oudet. The specific dimensioning rules according to the present invention can be advantageously applied to this kind of motor, as will be explained below.

As described in the US patent 4'518'883, figures 1 and 2 show a stepper motor with a rotary element 1 which comprises an annular disk 2 of a hard magnetic material and a supporting flange 3 of a non-magnetic material, such as a light alloy or a plastic material. The rotary element 1 is mounted on a motor shaft 4 which is supported by two bearings 5, 6 fixed in a casing 7, 8 of the motor. The disk 2 is magnetized axially so as to present on each of its faces 2N magnetic poles of alternating polarity arranged regularly along the free annular zone of the disk, N being a natural number such as 50 in the case of the motor of figure 1.

The stator of the motor according to figures 1 and 2 comprises four magnetic stator circuits of the same shape, the lower part of one of these circuits 9 being entirely visible in figure 1, which shows one half of the lower part of a neighboring circuit 10.

Each stator circuit comprises a plurality of pairs of polar parts such as the pair 116, 126 of figure 2, the polar parts being formed by plates of magnetically permeable material or by an assembly of laminated sheets. The polar parts have an axial plane of symmetry designated by reference 100 in the case of polar part 116, and the free ends, 13, 14 of one pair of polar parts such as 116, 126 form a narrow air-gap in which the magnetized disk 2 moves. Generally, a plurality of pairs of polar parts, in the shown case four of then, form a group of polar parts, the polar parts placed on either side of the magnetized disk being respectively coupled with electric coils such as 152, 162. These coils are each supported by a coil body such as 172 and 182, these coil bodies also constituting a support for the corresponding polar parts.

Each stator circuit thus comprises a first and a second group of polar parts such as the groups 91, 92 represented in figure 1, in which the respective bottom polar parts of these groups, 111, 112, 113, 114 and 115, 116, 117, 118 can be seen. On either side of the magnetized disk the ends of the polar parts which are opposite to the ends forming the air-gap, namely the ends 19,20 shown in figure 2, are connected to each other by a respective yoke part formed of magnetically permeable material such as the yoke parts 21,22.

In the preferred embodiment of the motor according to figures 1 and 2, each stator circuit 9,10, ... comprises separate yokes which extend between the outer polar parts of the assembly of the two groups of each circuit, such as the polar parts 111 and 118 for circuit 9. The different yoke parts are fixed to the casing 7, 8 of the motor through corresponding fixing parts such as 23, 24, the coil bodies being fixed by conventional means to the corresponding yoke parts. Figure 1 further shows the body 171 of the bottom coil 151 of group 91 and the body 172 of the bottom coil 152 of group 92.

A constructional variant using mechanically continuous yoke parts consists in providing saturable isthmuses between the various circuits, so as to substantially magnetically separate these circuits.

The axial planes of symmetry of the pairs of polar parts of a group form between each other an angle at least approximately equal to $2k \pi /N$, k being a natural number preferably equal to 1 which corresponds to a periodicity of like poles appearing on the faces of the magnetized disk of the rotative part. The respective axial planes of symmetry of a polar art of the first group of polar parts and of a polar part of the second group of the same circuit form between each other an angle at least approximately equal to $(2r + 1) \pi /N$, where r is a natural number, corresponding to an angular shift such that, for example, the polar parts of the first group 91 and the polar parts of the second group 92 co-operate respectively with different poles of the magnetized disk for either side of the disk. In the case of figure 1, r takes a value from 1 to 4 depending on the considered polar parts of each group.

In each magnetic stator circuit the coils are energized so that the magnetic field produced in the axial direction of the motor is of opposite polarity for the two groups of pairs of polar parts. Thus, in the top view of the lower part of the stator shown in figure 1, the poles N and S appear as indicated on faces 13 of the polar parts of circuit 9. The magnetic field closes in each stator circuit through the two yoke parts, i.e. within planes which are parallel to that of the magnetized disk. This field is substantially contained within the two cylindrical annular space portions having as a base the magnetized part 2 and extending away on either side.

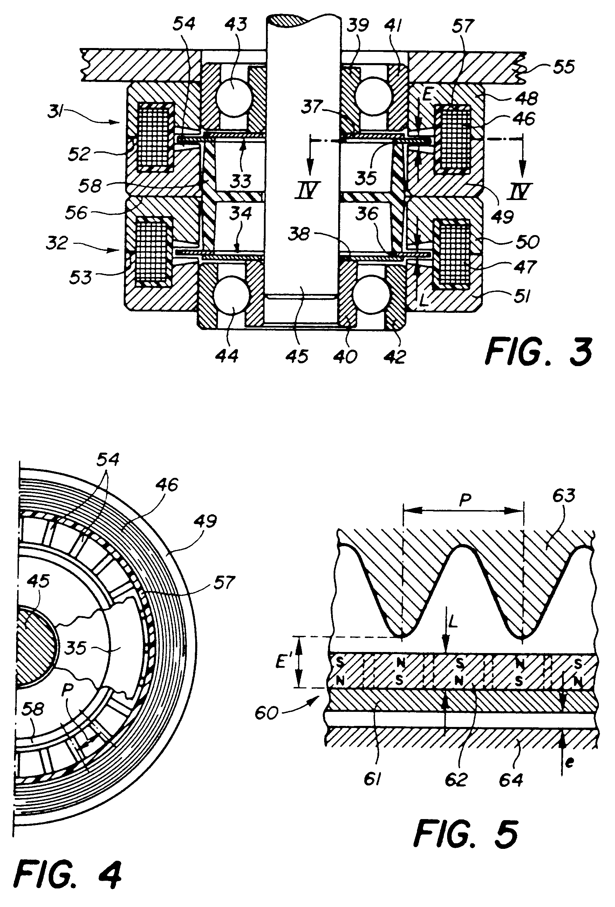

Another embodiment of a motor of the type to which the present invention applies is represented in figures 3 and 4.

The motor shown in fig. 3 is a two-stage motor, each stage of which comprises a respective stator portion 31, 32 and a corresponding rotatable member 33, 34. Each rotatable member comprises a respective rotor portion 35, 36 in the form of a thin, planar annular disk made from a magnetic material such as samarium-cobalt. These disks are magnetized parallel to their axis so as to present on each of their planar surfaces magnetic poles which are alternately North and South and which are distributed regularly along an annular zone of each surface. They are stuck or fixed in another adequate manner on a corresponding support part 37, 38, which is also in the form of an annular flat disk. In turn, the support disks are fixed, for example by welding, on the cheeks of respective internal races 39, 40 of two ball bearings. The corresponding external races or rings are respectively designated by 41 and 42, and the rows of balls of each of the bearings are designated by 43 and 44. The internal races of the two ball bearings are mounted on a shaft 45 of the motor so as to be fast with this shaft in their definitive position determined at the time of assembly of the motor.

The two stator parts 31, 32 of the motor in fig. 3 each comprise a corresponding electrical control coil 46 and 47 which is of annular form and is disposed coaxially relative to the axis of the motor. Each coil is coupled to a magnetic circuit comprising two annular parts which are respectively designated by 48, 49 and 50, 51. These annular parts are made of a material having very good magnetic permeability, and they are in contact in pairs along peripheral planar contact zones 52 and 53 in such a way that the magnetic resistance also remains low in this region. On the other hand, the parts 48 to 51 each have an interior annular part comprising a series of teeth, such as 54, which are distributed over the entire circumference in such a manner as to form in each of the stator parts an annular air-gap which is variable along its circumference. As shown in fig. 3, the axial section of the magnetic circuits thus has the shape of a C, and an annular zone of each part of the rotor is disposed in the respective air gap formed by these magnetic circuits.

In the motor of fig. 3, the external parts 48 and 51 of the magnetic circuits are mounted on the corresponding external rings or races 41 and 42 of the ball bearings of the motor. A support plate 55 is likewise fixed on a part of the external cylindrical surface of the ring 41 of one of the ball bearings.

The internal parts 49 and 50 of the two stator portions 31 and 32 are in contact along an annular cylindrical surface 56 perpendicular to the axis of the motor. In accordance with a modified constructional form, an intermediate element having planar parallel surfaces could be disposed between the parts or portions 49 and 50 so that they would be able to be spaced apart while maintaining the parallel relationship of their planar annular surfaces, such as the surface 56.

In fig. 3, there are further shown coil body parts 57 in which the control coils are fitted, and a separator 58 made of plastic material which may be disposed between the two parts of the rotor in order to facilitate the assembling of the motor.

Fig. 4 shows the configuration of certain elements of the motor as a section along the line IV-IV of fig. 3. As shown, the teeth 54 are radially orientated and are arranged regularly along the internal periphery of the visible annular part 49.

In the embodiments of motors described above in connection with figures 1 to 4, the air-gap in which the multipolar permanent arrangement is placed is formed between two series of teeth of substantially rectangular shape, the teeth being arranged on either side of the movable member so as to face each other. The spacing of consecutive teeth of a group associated with the same phase, measured along a circle through the centers of the teeth is, at least approximately (i.e., except for possible shiftings for harmonic cancellation) equal to P, which is the pole pitch on the movable member (i.e. the distance between magnetic poles of the same name measured along a circle through the centers of the magnetic poles). The axial distance E between opposite polar surfaces represents the minimum width of the air-gap of the motor. This air-gap is variable along the path of movement of a point of the movable member (i.e. a circle in the case of a rotor), the variation being in the embodiment of figures 1 and 2 a variation between E and a theoretically infinite value in the space between the separate polar parts. In figures 3 and 4, on the other hand, the variation is between E and a limited larger value between consecutive teeth. The thickness of the permanent magnets placed in the air-gap has been designated by L in all embodiments.

Fig. 5 shows schematically an alternative arrangement in which a movable member 60 comprises a yoke part 61 of high magnetic permeability which is bound to or rendered integral with a permanent magnet arrangement 62 similar to the one of the preceding examples of figures 1-4. In the embodiment of fig. 5 the stator comprises one toothed stator part 63 disposed on one side of the magnet arrangement, namely on the side opposite to the one which is connected to the yoke part 61, and another stator part 64 disposed opposite the yoke part and spaced therefrom by a distance e corresponding at least to the necessary mechanical clearance. The permanent magnet arrangement 62 has a thickness L.

The air-gap is defined in Fig. 5 as the space between the opposite surfaces of stator part 63 and yoke part 61. Stator part 63 shows, by way of example, rounded teeth forming poles spaced from each other by P. In addition the shape of the polar portions or of the stator parts can be changed to another example or in a similar way in any of the preceding examples, provided of course that the stator structure is adapted accordingly. The minimum air-gap width in the case of a dissymmetric arrangement such as that illustrated in Fig. 5 is designated by $E'$.

According to the invention, the minimum air-gap width E or $E'$ has to satisfy the following respective relationship:

$$0.385\,P + 1.4 \leq P/E \leq 0.706\,P + 1.85$$
$$0.385\,P + 1.4 \leq P/2E' \leq 0.706\,P + 1.85$$

wherein P and E or $E'$ are measured in mm along or on the mean path of movement of the rotor. Since in a rotary device the actual pole pitch length will increase with increasing diameter of the rotor, this may be compensated by also increasing the minimum air-gap width E or $E'$ in the radial direction in order to maintain P/E at a given constant value. However, since the pole pitch is generally determined by the radial size of the motor and its specific use, the actual variable for the dimensioning of the motor is E or $E'$.

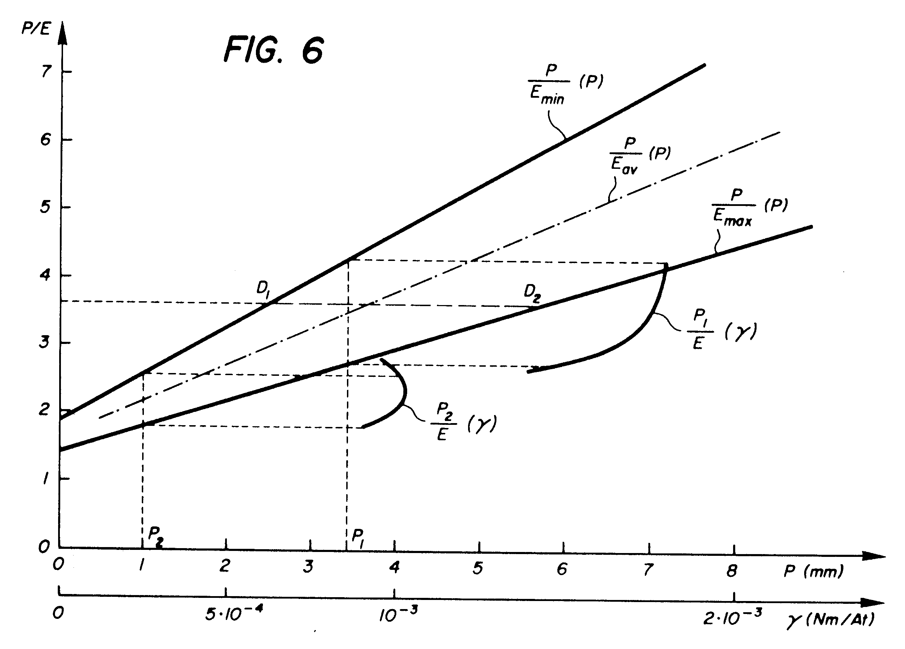

Fig. 6 is a graph showing in particular the range of P/E as a function of P. The limits of the P/E range according to the invention are indicated by the straight line $P/E_{min}$ and $P/E_{max}$, the average or preferred air-gap minimum width $E_{av}$ corresponding to the dotted line $P/E_{av}$.

Fig. 6 also illustrates the case of two examples of motor structures having respectively mean pole pitches $P_1$ and $P_2$, the motor with pole pitch $P_1$ having a structure as illustrated in figures 1 and 2 and the motor with $P_2$ having a structure according to figures 3 and 4. In these two cases, fig. 6 shows the variation of the torque per Ampere-turn $\gamma$ in Nm/At represented on the abscissa as a function of P/E (i.e. $P_1$/E and $P_2$/E), respectively. It is apparent from that variation, that the torque rapidly decreases beyond the limit corresponding to $E_{max}$, although it could be expected that the torque would increase with increasing E and a corresponding magnet thickness L.

The dynamic characteristics of the motor such as power rate and acceleration of the rotor appear to decrease rapidly outside the optimum range of the invention therefore that said range actually represents a rather critical unexpected limitation of the dimensioning of the present type of motors.

## Claims

1. An electric motor comprising a stator (9,10) and a movable member (1) with a multipolar permanent magnet arrangement (2) of a magnetic material having a substantially linear demagnetization characteristic in the field of use of said multipolar permanent magnet, said movable member (1) having two parallel, substantially planar surfaces on which appear the magnetic poles of said permanent magnet arrangement, said planar surfaces being spaced apart by a distance L representing the thickness of the magnets of said permanent magnet arrangement, wherein the thickness L is substantially smaller than the diameter of said parallel surfaces, the direction of magnetization being perpendicular to said surfaces, and said permanent magnet arrangement (2) having on each of said substantially planar surfaces at least one series of magnetic poles of the same polarity, the centers of said magnetic poles being spaced apart from each other by a length P measured along the path of their movement, the stator of the motor comprising two polar parts (116,126) facing each other and forming part of an air-gap in which said magnetic poles of said permanent magnet arrangement are placed, the width of the air-gap varying along the direction of movement of said movable member and having a minimum value E, the centers of the regions of minimum width of the air-gap being spaced along the direction of movement of said movable member at least approximately by said length P, characterized in that said minimum air-gap width E satisfies the relationship

$$0.385\ P\ +\ 1.4 \leq P/E \leq 0.706\ P\ +\ 1.85,$$

P and E being measured in mm, while the said thickness L of the permanent magnet arrangement (2) corresponds to E less the necessary mechanical clearance.

2. An electric motor comprising a stator (9,10) and a movable member (60) with a multipolar permanent magnet arrangement (62) of a magnetic material having a substantially linear demagnetization characteristic in the field of use of said multipolar permanent magnet, said movable member (60) having two parallel, substantially planar surfaces on a first one of which appear the magnetic poles of said permanent magnet arrangement, said surfaces being spaced apart by a distance L substantially smaller than the diameter of said parallel surfaces, the direction of magnetization being perpendicular to said surfaces, and said permanent magnet arrangement having on said first one of said planar surfaces at least one series of magnetic poles of one polarity, the centers of said magnetic poles being spaced apart from each other by a length P measured along the path of their movement, said movable member comprising a flat yoke part (61) of magnetically permeable material having a substantially constant thickness and forming the second of said substantially planar surfaces, the stator (9,10) of the motor comprising at least one magnetic circuit coupled with at least one electric energizing coil, said circuit comprising at least one polar part (63) facing said first substantially planar surface of the movable member (60) and defining with said yoke part part (61) of an air-gap having a width that varies along the direction of movement of said movable member and has a minimum value E', the regions where said minimum values occur being spaced along the direction of movement of said movable member at least approximately by said length P, characterized in that said minimum value E' satisfies the relationship

$$0.385\ P\ +\ 1.4 \leq P/2E' \leq 0.706\ P\ +\ 1.85,$$

P and E' being measured in mm.

3. An electric motor as claimed in Claim 1, wherein each polar part (115 to 116) placed on one side of the movable member comprises one or more tooth-shaped portions with a square-shaped or trapezoidal profile in the direction of movement of the movable member, characterized in that the width E satisfies the relationship P/E < 3.6.

4. An electric motor as claimed in Claim 2, wherein each polar part (63) comprises one or more tooth-shaped portions with a square-shaped or trapezoidal profile in the direction of movement of the movable member, characterized in that the value E' satisfies the relationship
2 P/E' < 3.6.

5. An electric motor as claimed in Claim 1 or 3, wherein said movable member (1) comprises a flat annular disk (2) mounted for rotation on a motor shaft (4), said stator (9,10) comprising a plurality of tooth-shaped polar portions (116,126) extending so as to face either side of the annular disk (2) in a direction parallel to the axis of rotation of said disk.

6. An electric motor as claimed in Claim 5, characterized in that said air-gap width E increases slightly from the inner to the outer part of said annular disk.

**Patentansprüche**

1. Elektrischer Motor, der einen Stator (9, 10) und ein bewegliches Teil (1) mit einer vielpoligen Dauermagnetanordnung (2) aus einem magnetischen Material aufweist, welches eine im wesentlichen lineare Entmagnetisierungskennlinie im Anwendungsbereich des genannten vielpoligen Dauermagneten besitzt, wobei das genannte bewegliche Teil (1) zwei parallele, im wesentlichen ebene Flächen aufweist, an welchen die Magnetpole der genannten Dauermagnetanordnung auftreten, wobei die genannten ebenen Flächen um einen Abstand L voneinander entfernt sind, der die Dicke der Magnete der genannten Dauermagnetanordnung darstellt, wobei die Dicke L wesentlich kleiner ist als der Durchmesser der genannten parallelen Flächen, die Magnetisierungsrichtung senkrecht zu den genannten Flächen ist und die genannte Dauermagnetanordnung (2) auf jeder der genannten, im wesentlichen ebenen Flächen mindestens eine Reihe von Magnetpolen derselben Polarität aufweist, deren Zentren voneinander um eine Länge P entfernt sind, die entlang dem Weg der Bewegung derselben gemessen ist, wobei der Stator des Motors zwei Polteile (116, 126) aufweist, die einander gegenüberliegen und die einen Teil eines Luftspalts formen, in dem die genannten Magnetpole der genannten Dauermagnetanordnung angeordnet sind, wobei die Breite des Luftspalts entlang der Bewegungsrichtung des genannten beweglichen Teils veränderlich ist und einen Minimalwert E besitzt, wobei die Zentren der Bereiche minimaler Breite des Luftspalts entlang der Bewegungsrichtung des genannten beweglichen Teils mindestens näherungsweise um die genannte Länge P voneinander entfernt sind, dadurch gekennzeichnet, dass die genannte minimale Luftspaltbreite E der Beziehung

$$0,385 \, P \; + \; 1,4 \leq P/E \leq 0,706 \, P \; + \; 1,85$$

genügt, wobei P und E in mm gemessen sind, während die genannte Dicke L der Dauermagnetanordnung (2) E weniger dem notwendigen mechanischen Spiel entspricht.

2. Elektrischer Motor, der einen Stator (9, 10) und ein bewegliches Teil (60) mit einer vielpoligen Dauermagnetanordnung (62) aus einem Magnetmaterial aufweist, das eine im wesentlichen lineare Entmagnetisierungskennlinie im Anwendungsbereich des genannten vielpoligen Dauermagneten besitzt, wobei das genannte bewegliche Teil (60) zwei parallele, im wesentlichen ebene Flächen aufweist, auf deren erster die Magnetpole der genannten Dauermagnetanordnung auftreten, wobei die genannten Flächen um einen Abstand L voneinander entfernt sind, der wesentlich kleiner ist als der Durchmesser der genannten parallelen Flächen, die Magnetisierungsrichtung senkrecht zu den genannten Flächen ist und die genannte Dauermagnetanordnung auf der genannten ersten der genannten ebenen Flächen mindestens eine Reihe von Magnetpolen einer Polarität aufweist, wobei die Zentren der genannten Magnetpole voneinander um eine Länge P entfernt sind, die entlang des Weges der Bewegung derselben gemessen ist, wobei das genannte bewegliche Teil ein flaches Jochteil (61) aus magnetisch permeablem Material aufweist, welches eine im wesentlichen konstante Dicke besitzt und die zweite der genannten, im wesentlichen ebenen Flächen bildet, wobei der Stator (9, 10) des Motors mindestens einen magnetischen Kreis aufweist, der mit mindestens einer elektrischen Erregerspule gekoppelt ist, und der genannte Kreis mindestens einen Polteil (63) aufweist, der der genannten ersten, im wesentlichen ebenen Fläche des beweglichen Teils (60) gegenüberliegt und mit dem genannten Jochteil einen Teil (61) eines Luftspalts bestimmt, welcher eine Breite besitzt, die entlang der Bewegungsrichtung des genannten beweglichen Teils veränderlich ist und einen Minimalwert E' besitzt, wobei die Bereiche, in denen die genannten Minimalwerte auftreten, voneinander entlang der Bewegungsrichtung des genannten beweglichen Organs zumindest näherungsweise um die genannte Länge P entfernt sind, dadurch gekennzeichnet, dass der genannte Minimalwert E' der Beziehung

$$0{,}385\ P\ +\ 1{,}4 \leq P/2E' \leq 0{,}706\ P\ +\ 1{,}85$$

genügt, wobei P und E' in mm gemessen sind.

3. Elektrischer Motor gemäss Patentanspruch 1, in dem jeder auf einer Seite des beweglichen Teils liegende Polteil (115 bis 116) einen oder mehrere zahnförmige Teile mit viereckigem oder trapezoidalem Profil in der Richtung der Bewegung des beweglichen Teils aufweist, dadurch gekennzeichnet, dass die Breite E der Beziehung P/E < 3,6 genügt.

4. Elektrischer Motor gemäss Patentanspruch 2, in dem jeder Polteil (63) eine oder mehrere zahnförmige Teile mit viereckigem oder trapezoidalem Profil in der Bewegungsrichtung des beweglichen Teils aufweist, dadurch gekennzeichnet, dass der Wert E' der Beziehung 2 P/E' < 3,6 genügt.

5. Elektrischer Motor gemäss Patentanspruch 1 oder 3, in dem das bewegliche Teil (1) eine flache, ringförmige Scheibe (2) aufweist, die zur Drehung auf einer Motorwelle (4) befestigt ist, wobei der genannte Stator (9, 10) eine Vielzahl von zahnförmigen Polteilen (116, 126) aufweist, die sich so erstrecken, dass sie jeweils der einen oder anderen Seite der ringförmigen Scheibe (2) in einer parallel zur Drehachse der genannten Scheibe verlaufenden Richtung gegenüberliegen.

6. Elektrischer Motor gemäss Patentanspruch 5, dadurch gekennzeichnet, dass die genannte Luftspaltbreite E vom inneren zum äusseren Teil der genannten ringförmigen Scheibe leicht zunimmt.

**Revendications**

1. Moteur électrique comportant un stator (9, 10) et un organe mobile (1) avec un arrangement d'aimant permanent multipolaire (2) en un matériau magnétique ayant une caractéristique de désaimantation essentiellement linéaire dans le domaine d'utilisation dudit aimant permanent multipolaire, ledit organe mobile (1) ayant deux surfaces parallèles essentiellement planes sur lesquelles apparaissent les pôles magnétiques dudit arrangement d'aimant permanent, lesdites surfaces planes étant espacées d'une distance L représentant l'épaisseur des aimants dudit arrangement d'aimant permanent, l'épaisseur L étant sensiblement plus petite que le diamètre desdites surfaces parallèles, la direction d'aimantation étant perpendiculaire auxdites surfaces et ledit arrangement d'aimant permanent (2) présentant, sur chacune desdites surfaces essentiellement planes, au moins une série de pôles magnétiques de même polarité, les centres desdits pôles magnétiques étant espacés, l'un de l'autre, d'une longueur P mesurée le long du chemin de leur mouvement, le stator du moteur comportant deux parties polaires (116, 126) disposées en regard l'une de l'autre et formant une partie d'un entrefer dans lequel sont placés lesdits pôles magnétiques dudit arrangement d'aimant permanent, l'épaisseur de l'entrefer variant le long de la direction du mouvement dudit organe mobile et ayant une valeur minimale E, les centres des régions d'épaisseur minimale de l'entrefer étant espacés le long de la direction du mouvement dudit organe mobile au moins approximativement de ladite longueur P, caractérisé en ce que ladite épaisseur minimale de l'entrefer E satisfait la relation

$$0{,}385\ P\ +\ 1{,}4 \leq P/E \leq 0{,}706\ P\ +\ 1{,}85,$$

P et E étant mesurés en mm, alors que ladite épaisseur L de l'arrangement d'amant permanent (2) correspond à E moins le jeu mécanique nécessaire.

2. Moteur électrique comportant un stator (9, 10) et un organe mobile (60) avec un arrangement d'aimant multipolaire (62) en un matériau magnétique ayant une caractéristique de désaimentation essentiellement linéaire dans le domaine d'utilisation dudit aimant permanent multipolaire, ledit organe mobile (60) ayant deux surfaces parallèles essentiellement planes, sur la première desquelles apparaissent les pôles magnétiques dudit arrangement d'aimant permanent, lesdites surfaces étant espacées d'une distance L sensiblement plus petite que le diamètre desdites surfaces parallèles, la direction d'aimantation étant perpendiculaire auxdites surfaces et ledit arrangement d'aimant permanent présentant, sur ladite première desdites surfaces planes, au moins une série de pôles magnétiques d'une polarité, les centres desdits pôles magnétiques étant espacés, l'un de l'autre, d'une longueur P mesurée le long du chemin de leur mouvement, ledit organe mobile comportant une partie de culasse plate (61) en un matériau magnétiquement perméable ayant une épaisseur sensiblement constante et formant la seconde desdites surfaces essentiellement planes, le stator (9, 10) du moteur comportant au moins un circuit magnétique couplé avec au moins une bobine électrique d'excitation, ledit circuit comportant au moins une partie polaire (63) en regard de ladite première surface essentiellement plane de l'organe mobile (60) et déterminant avec ladite partie de culasse, une partie (61) d'un entrefer ayant une épaisseur qui varie le long de la direction du mouvement dudit organe mobile et possède une valeur minimale E', les régions, dans lesquelles lesdites valeurs minimales se présentent, étant espacées le long de la direction du mouvement dudit organe mobile au moins approximativement de ladite longueur P, caractérisé en ce que ladite valeur minimale E' satisfait la relation

$$0,385\ P\ +\ 1,4 \leq P/2E' \leq 0,706\ P\ +\ 1,85,$$

P et E' étant mesurés en mm.

3. Moteur électrique selon la revendication 1, dans lequel chaque partie polaire (115 à 116), placée d'un côté de l'organe mobile, comporte une ou plusieurs parties dentées avec un profil carré ou trapézoïdal dans la direction du mouvement de l'organe mobile, caractérisé en ce que l'épaisseur E satisfait la relation $P/E < 3,6$.

4. Moteur électrique selon la revendication 2, dans lequel chaque partie polaire (63) porte une ou plusieurs parties dentées avec un profil carré ou trapézoïdal dans la direction du mouvement de l'organe mobile, caractérisé en ce que la valeur E' satisfait la relation de $2\ P/E' < 3,6$.

5. Moteur électrique selon la revendication 1 ou 3, dans lequel ledit organe mobile (1) comporte un disque annulaire plat (2) monté, en vue de sa rotation, sur un arbre du moteur (4), ledit stator (9, 10) comportant plusieurs parties polaires dentées (116, 126) s'étendant de façon à faire face à l'un ou l'autre côté du disque annulaire (2) dans une direction parallèle à l'axe de rotation dudit disque.

6. Moteur électrique selon la revendication 5, caractérisé en ce que ladite épaisseur de l'entrefer E augmente légèrement depuis la partie intérieure vers la partie extérieure dudit disque annulaire.

FIG. 1

FIG. 2

FIG. 3

FIG. 4

FIG. 5

FIG. 6

$\frac{P}{E_{min}} (P)$

$\frac{P}{E_{av}} (P)$

$\frac{P}{E_{max}} (P)$

$\frac{P_1}{E} (\gamma)$

$\frac{P_2}{E} (\gamma)$

EP 0 319 632 B1